# EUROPEAN PATENT APPLICATION

(11) **EP 1 650 580 A1**
(43) Date of publication of application: **26.04.2006**
(21) Application number: 03727515.3
(22) Date of filing: 22.05.2003
(51) Int. Cl.: G01S 11/12, B60R 21/00

(54) **EXTERNAL ENVIRONMENT-MONITORING CAMERA SYSTEM WHICH IS SUITABLE FOR A VEHICLE REAR-VIEW MIRROR**

(71) Applicant: Fico Mirrors, S.A., 08028 Barcelona (ES)
(72) Inventor: DAURA LUNA, Francesc, E-08192 Sant Quirze del Vallès (ES)
(74) Representative: Gislon, Gabriele
(86) International application number: PCT/ES2003/000238
(87) International publication number: WO 2004/104625

(57) **Abstract**

A camera system for the supervision of at least one dead angle, including an electro-optical detector device, suitable to acquire images detected from the exterior and at least one system for processing and analyzing the signals obtained by the camera and comprising two electrically interconnected and communicated modules:
a) a first module (12) comprising an electro-optical detector device and processing means,
b) a second module, acting also as vehicle interface, distanced to the previous one, operating the components of said two modules at, at least, two different voltage levels, determining in said division in two modules, a distribution of the supplied zones to determined voltage levels and intercommunicated, and of the zones susceptible to generate heat, reducing the dissipation needs and screening the sensitive circuitry of first module (12).

## Description

### Scope of invention

The present invention relates to a camera system for supervision of an exterior environment, in particular applicable to a vehicle rear view mirror, as for example an automobile or a truck, said camera being susceptible to be installed, due to its reduced size, in the interior of a supportting structure or casing of a rear view mirror, however, it may also be located in any other part of the vehicle.

### Background of the invention

The patent application EP-A-0591743 describes a device for detecting relative positions between vehicles, by means of an optical sensor associated with a rear view mirror casing, said optical sensor being associated with an electronic processing unit connected to a central information system of the vehicle, to which it sends processed signals, and finally providing alarm signals. The aim of this device is to warn the conductor of the vehicle wherein it is installed, through different signals (acoustic, luminous, etc.) of a possible collision risk with another approaching vehicle. Another stated possibility is the use of said device to warn the conductor of the approaching vehicle of the possible collision risk, by means of the activation of the emergency lights of the vehicle, or of its direction indicators. Even though, the mentioned antecedent states the possibility of the device consisting of an optoelectronic sensor based on CCD technology, its structure is not described in detail and, furthermore, no characteristics are given, nor is the system where the optical device is integrated described.

The patent application WO-A-01/61371 of the same applicant describes an object presence detection device similar to the object of the present intervention, however, in that case, specially referring to the process followed when acquiring and processing the images, once digitalized and previously amplified, as well as referring to the different calculation algorithms susceptible to being used for the generation of said warning signals. In this antecedent, one describes that a photo sensor and an electronic circuit, responsible for the digitalization of images, are physically united in a multi-chip module, however, one does not describe the disposition of a logical circuit responsible to analyze said digitized images.

In the mentioned antecedents no reference is made to the supply system of the detection device, nor to a possible protection of said device regarding interferences, and/or inappropriate supply voltages (their variations, overloads, etc.). What has been foreseen is the possibility that both, the optical sensor and the processing unit, are located in the interior of a casing carrying a rear view mirror of the vehicle, however, no mention is made to isolation means for themselves regarding ambient and external conditions, as for example rain, humidity, dirt, strikes, etc., nor to the protection referring to luminous incidence. Furthermore, no mention is made to the distance between the sensor and the processing unit, and, therefore, to the possible losses or alterations the signals coming from the sensor may have suffered before reaching the processing unit.

Therefore, it seems to be necessary to offer an alternative to face these potential problems, focusing on the physical implementation of a device as the one mentioned in patent application WO-A-01/61371, in a motor vehicle, offering appropriate solutions. In particular, it is desirable to offer a good isolation and protection of the electro-optical device regarding the ambient conditions, electromagnetical emissions, etc, as well as to provide voltages to the camera and to all the circuitry as appropriate as possible in terms of purity, proximity to nominal values, stability, etc., arising from a supply system appropriate for that target, and protected, at the same time, against overloads, polarity inversion, entry voltage variations, interferences, etc. This is especially important when bearing in mind that these systems obtain the supply from the vehicle's battery, which offers very variable and scarcely clean voltages. Furthermore, it is interesting, aiming at the increase of the mentioned isolation, to clearly separate the supply system and the rest of circuitry, including an electro-optical image detector device, which in a preferred embodiment, to which the next explanation will refer to, is of C-MOS type, and to minimize the possible losses in the signals arriving at the .analysis and processing unit with respect to the signals sent from the optical sensor. This target may be achieved reducing the distances between the sensor and the rest of the circuitry (apart from the supply system) as much as possible.

The target of the present invention is to provide for a camera system for supervision of an exterior environment applicable to a rear view mirror, with the characteristics mentioned in the previous paragraph, i.e. a good isolation between the supply system (of a great quality itself) and the electro-optical device, in this example in form of a C-MOS camera, and the rest of electronic circuits destined to work with the data obtained by the mentioned camera, as well as reaching the mayor compactness possible between the camera and all the mentioned circuits, and its protection against all type of external aggressions and/or perturbations.

### Brief description of the invention

The camera system for supervision of an exterior environment applicable to a motor vehicle rear view mirror, according to the present invention, includes a camera, which is adapted for detecting the presence of objects susceptible to collide with the mentioned vehicle, in a determined supervisory field, covering at least one dead angle, being of the type including an electro-optical detector device of C-MOS technology, appropriate for acquiring images picked up from the exterior and at least one system for processing and analyzing the signals obtained by the camera to, finally, provide warning signals or the visualizing of said images. Said system is organized in at least two electrically interconnected and communicated modules, thereby achieving to separate the most sensitive circuitry from the rest of the system, obtaining a better isolation and a better distribution of the heat to be dissipated by each of them. Said sensitive circuitry, together with the camera, is protected against external aggressions, by its placing inside a compact casing. All this offers clear advantages when comparing it to the state of the art.

The mentioned modules are the following:
a) a first module comprising an electro-optical detector device,
b) a second module acting as vehicle interface, distanced from the previous ones, foreseeing at least one filtration unit associated with said two modules as a whole, and operating the components of said two modules at, at least, two different voltage levels, said division in two modules determining a distribution of the supplied zones at certain voltage levels and of the zones susceptible to generate heat, reducing, herewith, the dissipation needs, and screening the sensitive circuitry of said first module.

According to a preferred embodiment, the first module comprises, furthermore, processing means, and said second module is itself divided into two interconnected submodules:
b.1) a first submodule, distanced from the previous, which comprises a regulating circuit, and
b.2) a second supply submodule, acting also as vehicle interface, distanced from the previous ones, comprising one or more filters, a control circuit, an amplification circuit and a communication circuit.

The mentioned compact casing is suitable to be inserted in a reduced housing, as in the interior of a support structure of a rear view mirror, and the first module is interconnected to said first submodule by means of a flexible multilayer printed circuit and this is interconnected to the second submodule through a connector, which is integrated, together with the first submodule, in a connector casing, providing both for a bidirectional signal pass.

### Brief description of the drawings

Other characteristics of the invention will be shown more clearly starting from the following description of an embodiment illustrated by the enclosed figures, which is to be understood in an illustrating, however, not limiting way.

In the following, an embodiment is explained, with reference to the enclosed figures, in which:

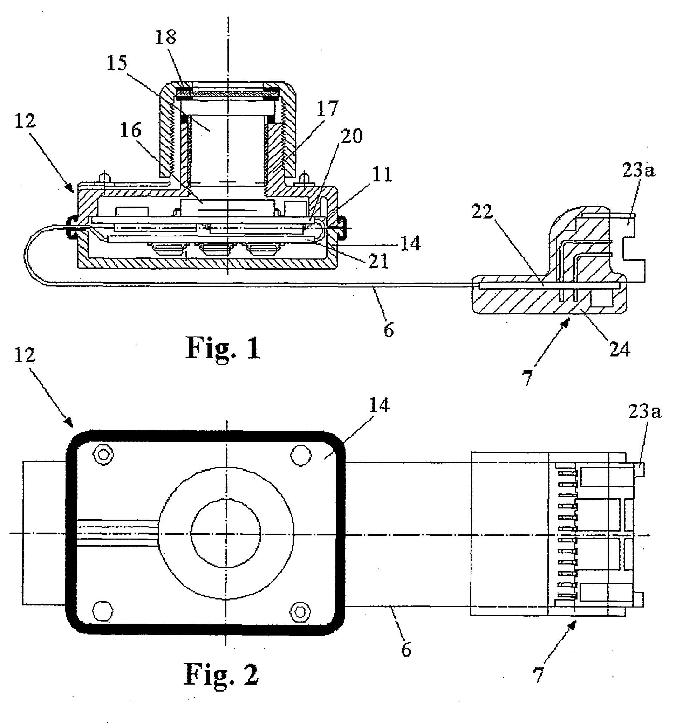

Fig. 1 is a transversal section view of a camera of C-MOS technology, together with part of the system in which it is integrated.
Fig. 2 is a ground view of the system of Fig. 1, where one may observe almost all of the system, except the second submodule.

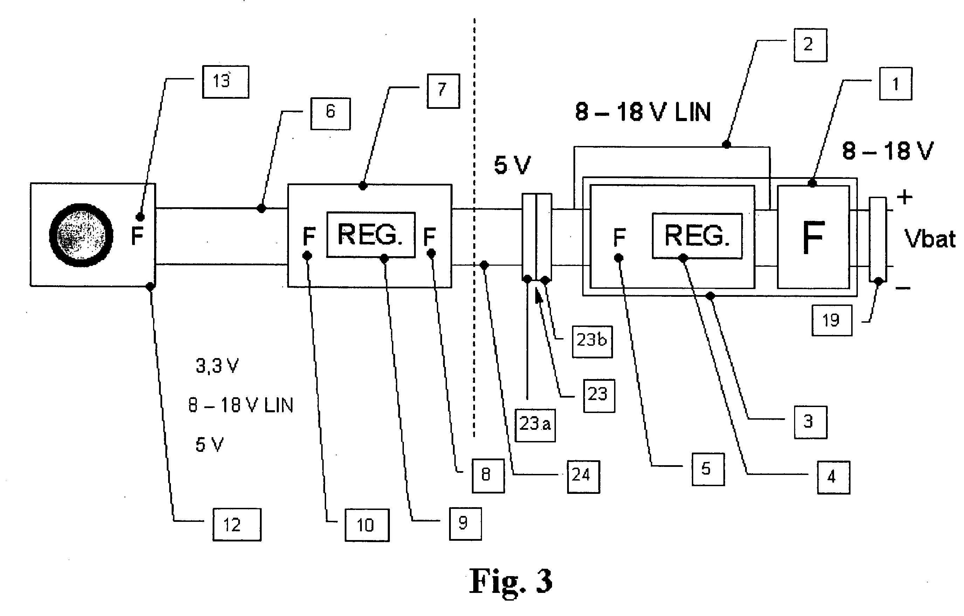

Fig. 3 is a scheme reflecting a distribution at block level of the complete system in which the camera is integrated.

### Detailed description of an embodiment

As shown by these figures, the camera system for supervision of an exterior environment applicable to a motor vehicle rear view mirror, whose camera is adapted for detecting the presence of objects susceptible to collide with the mentioned vehicle, in a determined supervisory field, covering at least one dead angle, includes an electro-optical detector device, which in a preferred embodiment is of C-MOS technology, suitable to acquire images picked up from the exterior and a system for processing and analyzing the signals obtained by the camera, in order to finally provide warning signals of the visualizing of said images. Said system is organized in two electrically interconnected and communicated modules: a first module 12 and a second module distanced from the previous one, which is divided itself, in a preferred embodiment, in a first submodule 7 distanced from the first module 12, and a second supply submodule 3 distanced from the previous one.

The aim of dividing the system into two, is the distribution of the zones supplied at certain voltage levels, as said two modules comprise components which operate at, at least, two different voltage levels, and to distribute the zones susceptible to generate heat, reducing the dissipation needs, and screening the sensitive circuitry of said first module 12 regarding possible electromagnetical interferences.

Said first module 12 consists of two rigid printed multilayer circuits (PCB) 20, 21, with a series of components placed and attached on them, described below. Said rigid printed multilayer circuits (PCB) 20, 21 are located in parallel to one another, and are integrated in a compact casing 14, susceptible to be inserted in a reduced housing, as in the interior of a supporting structure of a rear view mirror, and interconnected by a flexible printed multilayer circuit 11, folded, and which provides for a bidirectional signal pass. Casing 14, which is metallic and water-proof, promotes heat dissipation and disposes of a protruding tubular sector 17 housing a lens 15 or optical member, placed on a detecting matrix of said C-MOS device, in order to properly focus the images to be detected, as well as an element 18 for conditioning the transparency conditions of the lens or optical system, which may materialize in form of an electrical heater.

Said first submodule 7 is connected to said first module 12 by means of a flexible multilayer printed circuit 6, and consists of a rigid multilayer printed circuit 22, with a series of components located and attached on it, described below, and integrated into a connector casing 24, which covers, furthermore, a part 23a of a connector 23 which unites the first submodule 7 with the mentioned second submodule 3. Said connector casing 24 is solid and normally located in the exterior part of the vehicle but in the interior of a zone of an exterior structure of the vehicle, as a casing of a rear view mirror.

In this first module 12 and first submodule 7, of the second module, the most sensitive circuitry of the system is located. Particularly, first module 12 comprises, in the present embodiment, an electro-optical detector device, as of C-MOS technology, a processor, ROM and RAM memories for a permanent or temporal storage of data used for the processing of mentioned images, and one or more filters 13, responsible for the filtration of entry voltages of said first module 12 coming from said submodule 7. In the described embodiment, said voltages, which are three, are of direct type and two of them have values of approximately 3.3V and 5V, for a specific group of components located in the printed circuit 20. The third voltage has a value between 8 and 18 V, imposed by a bus LIN 2 of the vehicle integrated in the communication network, connecting to modules 12 and 7, using the most convenient one for the supply of the mentioned conditioning element 18. The three voltages arise from the first submodule 7. The first submodule 7 comprises a regulating circuit 9 and one or more filters 8, 10, located on said rigid multilayer printed circuit 22. In the first module 12, said C-MOS device and the mentioned processor are associated with an application-specific integrated circuit A.S.I.C. 16, which together with said memories, said filters and a series of electronic components, are located above the mentioned multilayer printed circuits 20,21.

In mentioned first submodule 7, one of both filters 8 is of entry type and responsible for the filtration of one or more voltages arising from the mentioned second submodule 3, of direct type and with an approximate value of 5V, one of them, and another, possible one, with a variable value between 8 and 18V, and one of both mentioned filters 10 is of exit type and responsible for the filtration of one or more voltages arising from said regulating circuit 9, providing at its exit a direct voltage of 5V and responsible for regulating a voltage arising from mentioned entry filter 8, also of 5V.

Regarding the second submodule 3, acting as vehicle interface, this is separated from first module 12 and first submodule 7, to which it is connected through a multicore wiring 24, as a cabling or flat multicore cable, with bidirectional signals flow, through a connector 23, and normally located in the interior of the motor vehicle, from which it will take the voltage arising from the battery, by means of a connector 19, located in said second submodule 3, susceptible to be connected to the supply of said motor vehicle. Said voltage varies between 8 and 18 V, is of direct type and will be filtered by an entry filter 1. The obtained voltage at the exit of said filter 1 will go two ways, one to the first submodule 7 and the other to a regulating circuit 4 located in the second submodule 3. The exit of said regulating circuit 4 will be a direct voltage with an approximated value of 5V, for a specific group of components and, obviously, regulated. Said exit voltage of the regulating circuit 4 will be leaded to a second filter 5, or exit filter 5, of said second submodule 3, responsible for its filtration. Said exit voltage of said exit filter 5 is applied to the first submodule 7, through the mentioned multicore wiring 24, with bidirectional signals flow, which will be, furthermore, the responsible for the transfer of the previous mentioned exit voltage of entry filter 1. This second submodule 3 comprises, furthermore, a control circuit, an amplification circuit and a communication circuit, which are applied to the managing and treatment of data offered by the first module 12, through the first submodule 7, and supply appropriate signals on the base of said data to a central information managing center, which will be the responsible to provide warning signals to the vehicle's occupants or to offer the picked up images, for its visualizing, to a device arranged for that purpose, as a display or screen..

Said voltage variable between 8 and 18 V may adopt other values, as for example 21 and 50V in case of 42 V nets and dual nets (14V - 42V), of vehicles, and of 18 and of 32V in case of 24 V nets (used in trucks). In these cases, it will be possible to use a bidirectional converter previous to the here explained system, which at its exit will provide the previously mentioned voltage values between 8 and 18 V.

As may be seen from the previous paragraphs, all the system includes two regulating circuits 4, 9, one in the first submodule 7 and the other in the second submodule 3, and both of them may be of lineal or switched type, or one of each type, depending on the desired quality and size, requirements of which will be more demanding regarding the regulating circuit 9 of the first submodule 7, as this has to be of a reduced size and should not dissipate much heat and offer suitable signals for the most sensitive circuitry explained before. Obviously, the way these filters are designed will affect, furthermore, the design of the mentioned filters 1, 5, 8, 10 and 13 which, as may be observed from previous paragraphs, are arranged in different stages. With regard to the stated about the regulating circuits, in terms of the design requirements to obtain a better quality in the obtained voltages and a circuit as small as possible, this may also be applied when designing the filters, i.e., that filter 13 of the first module 12, will be the one to be executed with more demanding requirements, as the voltages exiting from it will be directly applied to the most sensitive circuitry of the system.

In another embodiment, the electro-optical detector device could be an analogue camera, which could, furthermore, dispose of means for conditioning the transparency conditions of a lens integrated therein. In this case, if we would like to process and analyze the images acquired by it, and not only visualize them, we would have to add an analogue-digital converter to the already explained circuitry.

All the previously mentioned electronic circuits consist of a series of electronic components suitable for each case, as for example, coils, resistances, condensers, transistors, quartz crystals, integrated circuits (as voltage regulators, etc.) and diodes, all of them well known.

A person skilled in the art could introduce changes and modifications in the described embodiments, without departing from the scope of the invention as described in the enclosed claims.

## Claims

1. Camera system for supervision of an exterior environment applicable to a motor vehicle rear view mirror, being said camera adapted for detecting the presence of objects susceptible to collide with said vehicle, in a determined supervisory field, covering at lest one dead angle, and being said system of the type including a device suitable to acquire images picked up from the exterior and at least one system for processing and analyzing the signals obtained by the camera, **characterized in that** it comprises at least two electrically interconnected and communicated modules:
a) a first module (12) which comprises an electro-optical, detecting device,
b) a second module acting as vehicle and/or user interface, distanced from the previous one, foreseeing at least one filtration unit associated with said two modules as a whole, and operating the components of said two modules at, at least, two different voltage levels.

2. Camera system, according to claim 1, wherein said first module (12) comprises at least processing means.

3. Camera system, according to claim 2, wherein said second module is itself divided into two interconnected submodules:
b.1) a first submodule (7), distanced from said first module, which comprises at least one regulating circuit (9), and
b.2) a second supply submodule (3), acting also as vehicle and/or user interface, distanced from the previous one.

4. Camera system, according to claim 1, wherein said electro-optical detecting device is of C-MOS technology.

5. Camera system, according to claim 3, wherein said processing means comprise a processor and memories.

6. Camera system, according to claim 5, wherein said first module (12) comprises at least one filter (13), the mentioned first submodule (7) comprises one or more filters (8, 10) and said second submodule (3) comprises one or more filters (1, 5).

7. Camera system, according to claim 6, wherein said filter (13) of the first module (12) is one, the mentioned one or more filters (8, 10) of the first submodule (7) are two and said one or more filters (1, 5) of the second submodule (3) are two.

8. Camera system, according to claim 7, wherein the second submodule (3) comprises at least one regulating circuit (4), one control circuit, one amplification circuit and one communication circuit applied to the management and treatment of data offered by the first module (12), passing through the first submodule (7).

9. Camera system, according to claim 1, wherein said first module (12) is incorporated in a compact casing (14), susceptible to be inserted in a reduced accommodation, as in the interior of a support structure of a rear view mirror.

10. Camera system, according to claim 9, wherein said casing (14) has a protruding tubular sector (17) which accommodates a lens (15) or optical system located on a detecting matrix of the electro-optical detecting device, in order to appropriately focusing the images to be picked up.

11. Camera system, according to claim 10, wherein said protruding tubular sector (17) of the casing (14) accommodates, near by said lens (15) or optical system, a conditioning element (18) for conditioning the transparency conditions of the mentioned lens (15).

12. Camera system, according to claim 11, wherein said casing (14) is metallic and water-proof.

13. Camera system, according to claim 11, wherein said conditioning element (18) for conditioning the transparency conditions of the lens (15), is an electrical heater.

14. Camera system, according to claim 3, wherein said first submodule (7) is connected to said second submodule (3) through multicore wiring means (24), as a cabling or flat cable, with bidirectional signals flow, through a connector (23), a part (23a) of which is integrated in a connector casing (24), and the second submodule (3) is provided with a connector (19) susceptible to be connected to the supply of a motor vehicle.

15. Camera system, according to claim 6, wherein said electro-optical detecting device and said processor of the first module (12) are associated with an application-specific integrated circuit (A.S.I.C.) (16).

16. Camera system, according to claim 6, wherein said filter (13) of the first module (12) is responsible for the filtration of entry voltages to the first module (12) coming from the first submodule (7).

17. Camera system, according to claim 14, wherein said circuits of the first submodule (7) are located on a rigid multilayer printed circuit board (PCB) (22), which is integrated within the mentioned connector casing (24), united to the first module (12) through a flexible multilayer printed circuit (6), which provides for a bidirectional signals pass.

18. Camera system, according to claim 15, wherein said memories, said filters (13) and said A.S.I.C. (16) of the first module (12) are located on two rigid multilayer printed circuit boards (PCB) (20, 21), located in parallel and interconnected by a flexible multilayer printed circuit (11), folded and providing for a bidirectional signals pass.

19. Camera system, according to claim 7, wherein in the first submodule (7), one of both filters (8) is of entry type and responsible for the filtration of voltages coming from the second submodule (3) and one of both filters (10) is of exit type and responsible for the filtration of one or more voltages coming from said regulating circuit (9), applied to the regulation of a voltage coming from the entry filter (8).

20. Camera system, according to claim 8, wherein in the second supply submodule (3), one of both filters (1) is of entry type and responsible for the filtration of voltages coming from a battery located in the interior of the motor vehicle and one of both filters (5) is of exit type and responsible for the filtration of voltages coming from said regulating circuit (4), which is applied to the regulation of a voltage coming from the mentioned entry filter (1).

21. Camera system, according to claim 16, 19 or 20, wherein said voltages are of direct type.

22. Camera system, according to claim 20, wherein said regulating circuits (4 and 9) are of lineal type.

23. Camera system, according to claim 20, wherein said regulating circuits (4 and 9) are of switched type.

24. Camera system, according to claim 20, wherein said regulating circuits (4 and 9) are two.

25. Camera system, according to claim 7, wherein said filters (1, 5, 8, 10 and 13) are arranged in different stages.

26. Camera system, according to claim 1, wherein said electro-optical detecting device is an analogue camera.

27. Camera system, according to claim 26, wherein said camera disposes of a conditioning element (18) for conditioning the transparency conditions of a lens integrated therein.
